# EUROPEAN PATENT APPLICATION

(11) **EP 2 323 458 A1**
(43) Date of publication of application: **18.05.2011**
(21) Application number: 09447057.2
(22) Date of filing: 13.11.2009
(51) Int. Cl.: H04W 76/06

(54) **Method for setting up communications in a cellular system**

(71) Applicant: Thomson Telecom Belgium, 2650 Edegem (BE)
(72) Inventor: Singh, Harsharan Jit, 2650 Edegem (BE)
(74) Representative: Ruellan-Lemonnier, Brigitte

(57) **Abstract**

The present invention concerns a cellular access point and a method at a cellular access point (1), comprising the steps of opening (S1) a communication with a cellular terminal (3), comprising setting up a Radio Resource Control connection with the cellular terminal, on termination of the communication (S2), leaving the cellular terminal in the Radio Resource Control connection (S3); and when setting up a second communication with the cellular terminal, opening the second communication from the Radio Resource Control connection (S4).

## Description

### FIELD OF THE INVENTION

The present invention relates generally to call management in cellular system and in particular to a cellular access point and a method at said cellular access point for setting up a communication.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A macrocell is a cell in a mobile phone network that provides radio coverage served by a cellular base station, namely a NodeB in a universal mobile telecommunication system (UMTS) network. It is adapted to connect cellular handsets, also called User Equipment or UE, to a mobile network. The area covered by a base station is called a cell. When a UE is located in a cell, it can connect to the base station.

A femtocell access point, noted FAP hereinafter, and also called an access point base station or a Home Node B, is a cellular base station. From a mobile handset, it is functionally similar to a macrocell cellular base station. A FAP is adapted to cover a much lower cell range than a macrocell. The cell size covered by a FAP is called a femtocell hereinafter. A typical use of a FAP is inside a building to cover areas that are not reached by a macrocell. A cellular service operator provides a plurality of macrocells and FAP.

The general procedures for cell selection and reselection are specified in 3GPP TS. 23.122 standard version 9.0.0 (2009-09) on 3rd Generation Partnership Project; Technical Specification Group Core Network and Terminals; Non-Access-Stratum (NAS) functions related to Mobile Station (MS) in idle mode (Release 9) and noted 23.122 hereinafter, and 3GPP TS.25.304 standard, version 8.6.0 (2009-06) on 3rd Generation Partnership Project; Technical Specification Group Radio Access Network; User Equipment (UE) procedures in idle mode and procedures for cell reselection in connected mode (Release 8), and noted 25.304 hereinafter. According to the standard documents, when a cellular handset, also called User Equipment or UE, is switched on, it attempts to make contact with a public land mobile network (PLMN). The particular PLMN to be contacted may be selected either automatically or manually. The UE looks for a suitable cell of the chosen PLMN and chooses that cell to provide available services, and tunes to its control channel. This choosing is known as "camping on the cell ". The Management System then registers its presence in the registration area of the chosen cell if necessary, by means of a location registration (LR), GPRS attach or IMSI attach procedure, IMSI meaning the International Mobile Subscriber Identity. If the UE loses coverage of a cell, or find a more suitable cell, it reselects onto the most suitable cell of the selected PLMN and camps on that cell. If the new cell is in a different registration area, an LR request is performed.

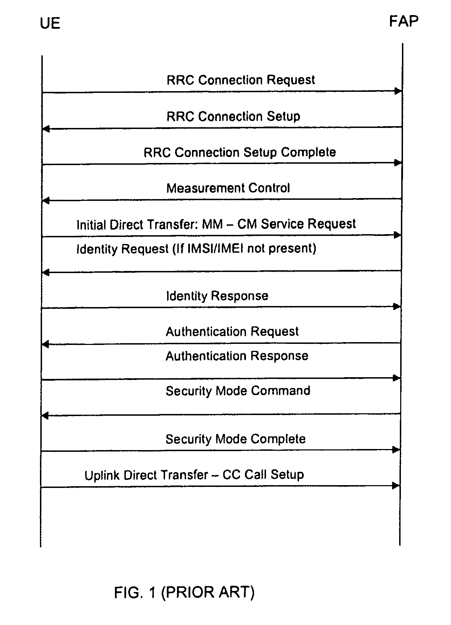

As indicated in the radio resource control configuration, specified in the 3GPP 25.331 standard, version 9.0.0 (2009-09) on 3rd Generation Partnership Project; Technical Specification Group Radio Access Network; Radio Resource Control (RRC); Protocol Specification (Release 9), and noted 25.331 hereinafter, the UE comprises five states of operation; Idle State, CELL_DCH, CELL-FACH, URA_PCH or CELL_PCH. When a UE has an RRC Connection, it can be in either of the CELL_DCH, CELL FACH, URA_PCH or CELL_PCH state. If the data or voice transmission to or from the UE is terminated, the FAP directs the UE to go to idle state. If the UE wants to initiate data communication again, it sends a new RRC Connection Request and most of the associated procedures like Identification, Authentication, Security or Integrity take place, as illustrated in figure 1. This generally leads to high data or voice call setup time. This mechanism fits to a macrocell, which doesn't expect long term connectivity of the UE in the same cell. However, this mechanism is energy and time consuming both at the UE and at the access point. It would be desirable to have a less time and energy consuming setup procedure.

### SUMMARY OF THE INVENTION

The present invention attempts to remedy at least some of the concerns connected with the long setup procedure of the prior art, by providing a method at a cellular access point that enables to reduce the setup time.

The present invention also concerns a cellular access point adapted to reduce the communication setup time.

The invention applies notably to the field of femtocell access point but also to any other kind of cellular access points.

To this end, the invention relates to a method at a cellular access point, comprising the steps of opening a communication with a cellular terminal, comprising setting up a Radio Resource Control connection with the cellular terminal, on termination of the communication, leaving the cellular terminal in the Radio Resource Control connection and when setting up a second communication with the cellular terminal, opening the second communication from the Radio Resource Control connection.

Surprisingly, and contrary to the usual practice in the mobile environment, the cellular terminal remains connected to the access point even after a communication is terminated. This is suitable to a femtocell access point environment, and in particular to a home node B, where a cellular terminal may be connected to the same cell for a large period of time with less mobility than in a macrocell. The femtocell access point may expect long term connectivity of the cellular terminal in the same cell. The setup mechanism is then adapted to this environment, and the setup time is strongly reduced.

According to an embodiment of the invention, the method comprises the step of on termination of the communication, setting the terminal into a CELL_PCH state. Advantageously, this state doesn't consume any supplementary resource.

According to an embodiment of the invention, the communication is a voice call.

According to an embodiment of the invention, the method comprises the step of, prior to opening the second communication, checking if the cellular terminal is still present in the cell of the cellular base station.

The invention also relates to a cellular access point comprising a call setup manager for managing a communication with a cellular terminal, the communication comprising a Radio Resource Control connection and, on termination of a communication with a cellular terminal, leaving the cellular terminal in the Radio Resource Control connection so that on setting up a second communication with the cellular terminal, opening the second communication from the Radio Resource Control connection.

According to an embodiment of the invention, the call setup manager is adapted to, on termination of a communication with a cellular terminal, setting the cellular terminal in a CELL_PCH state.

According to an embodiment of the invention, the cellular access point comprises a device classifier for recoding an identifier of the cellular terminal, the cellular access point device being adapted to manage communication with a recorded cellular terminal only.

According to an embodiment of the invention, the device classifier is adapted to enable an end user to enter a cellular terminal identifier.

According to an embodiment of the invention, the cellular access point comprises a detector for detecting a cellular terminal that regularly connects to the cellular access point so that when a cellular terminal regularly connects to the cellular access point, recording an identifier of the cellular terminal at the device classifier.

According to an embodiment of the invention, the cellular access point comprises a presence detector for detecting if the cellular terminal is still present in the cell of the cellular base station.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a flow chart of setup procedure according to the prior art;
- Figure 2 is a block diagram of a system according to an embodiment of the invention;
- Figure 3 is a block diagram of a femtocell access point according to an embodiment of the invention;
- Figure 4 is a flow chart of a call management method according to the embodiment and
- Figure 5 is a flow chart of call setup procedure according to an embodiment of the invention;

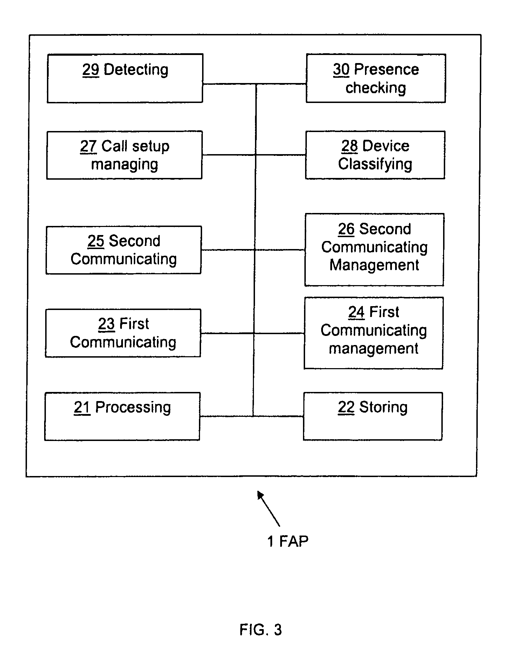

In Figure 3, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of a femtocell, but the invention is not limited to this particular environment and may be applied within other frameworks such as a macrocell.

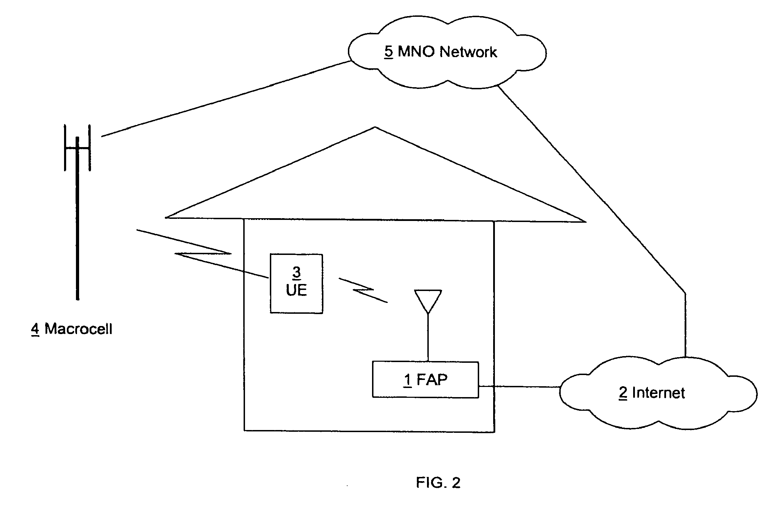

The system according to the present embodiment is illustrated in figure 2. The FAP 1 is connected to the service provider network, also called the mobile network operator (MNO) network 5, through a broadband connection. In the embodiment, the broadband connection is a digital subscriber line connection that provides connection to the Internet 2. The FAP 1 located in the home environment is connected to the Internet 2 through a digital subscriber line gateway not represented. The FAP is a standalone device. Of course the FAP might also be embedded in such a gateway. The FAP enables to connect a UMTS compatible UE 3. When connected to the FAP, the UE accesses the MNO network through the Internet. The UE 3 may also be connected to the MNO network through a macrocell 4 in a manner well known per se.

The FAP according to the embodiment is illustrated in figure 3. It comprises a first communicating module 23 for emitting and receiving in the UMTS network. In particular the first communicating module is a 3G radio emitter-receiver. More generally, this is a mobile networking interface. A first communicating management module 24 is adapted to perform the management and control functions of the first communicating module. The FAP also comprises a second communicating module 25 for emitting and receiving to the mobile network. A second communicating management module 26 is adapted to perform the management and control functions of the second communicating module. In the embodiment, the broadband network is of digital subscriber line technology. Of course it could also be any other type of broadband connection, such as a cable, fiber optics or satellite. The FAP also comprises storing module 22 such as a memory for storing among others the list of UE identifiers as indicated hereinafter. The FAP also comprises a processor 21 that is adapted to execute the selection and reselection of the embodiment.

The FAP according to the embodiment comprises a call setup managing module 27 adapted to perform the voice call setup and termination as indicated hereinafter. Namely, when a voice call terminates, the FAP sets the UE into a particular state, the CELL_PCH state. The CELL_PCH is generally used during a data call when there is no data transmission going on. The CELL_PCH state is defined in 3GPP 25.331, and in particular in chapter 7.2.2.1. In this state, no uplink activity is possible. The functions of the UE is similar to those in the idle mode, including cell reselection, reception of system information via broadcast, monitoring of the paging channel. This state consumes no resources. In this state, the network knows in which cell the UE is located; the UE is connected.

The voice call termination according to the embodiment may be applied not to all UEs but only to a subset of UEs, the ones that are recorded at the FAP. The FAP then comprises a device classifying module for recording the UE that will then be elected to the voice call termination of the embodiment. These UEs are for example the ones that are intended to regularly connect to the FAP. In an environment where a FAP is located in an end user home, the end user registers his UEs to the FAP in a manner well known per se, so that the FAP performs the termination process of the embodiment to these recorded UEs.

Alternatively, the FAP comprises a detecting module 29 that is adapted to detect and record the UEs that regularly connect to the FAP. In particular, the detecting module is a Closed Access Control which identifies the UE based on its IMSI. Then, the FAP performs the termination process of the embodiment to these recorded UEs.

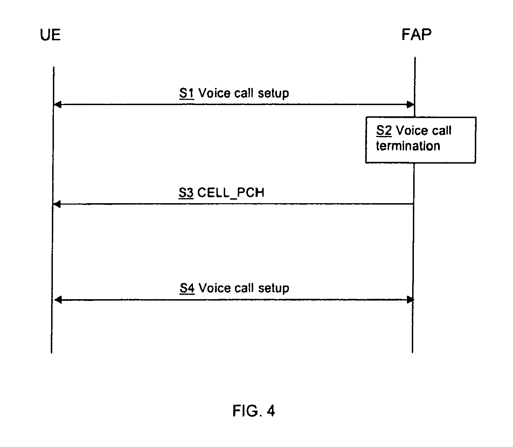

The methods for managing a voice call according to the embodiment are now described, as illustrated in figure 4.

When a UE first sets up a voice call with the FAP, step S1, the voice call setup process as illustrated in figure 1 is performed. The FAP sets up a RRC Connection, and then authenticates and secures the connection with the UE. The voice call setup conforms to the 3GPP 25.331 standard.

When a voice call terminates, step S2, the FAP doesn't terminate the RRC connection. It asks the UE to go into the CELL_PCH state, step S3. It sends messages like CELL UPDATE CONFIRM, RADIO BEARER RECONFIGURATION. These messages are defined in 3GPP 25.331 standard. CELL_UPDATE_CONFIRM is used to reply to the CELL_UPDATE_REQUEST message received from an UE. RADIO-BEARER-RECONFIGURATION is required to reconfigure the Radio bearer, which is generally required during change of state.

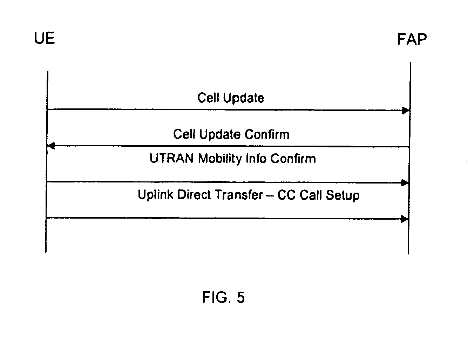

Later the UE wants to set up another voice call, step S4. The UE being in CELL_PCH state, it performs the steps illustrated in figure 5. In particular, the RRC connection is already active, and the voice call setup is reduced to limited signals between the UE and the FAP. Most of the procedures like UE Identification, UE Authentication, Security Control, etc are not required in an already active RRC Connection. The voice call setup then comprises a cell update message sent from the UE to the FAP, a cell update confirm from the FAP to the UE. Then the UE sends a 'UTRAN Mobility Info Confirm' and an 'Uplink Direct Transfer - CC Call Setup'. These messages are defined in 3GPP 25.331, figure 8.3.1.1.

Of course, when the other call terminates, the UE is also set into the CELL_PCH state.

In case FAP initiates the voice call, assuming the UE is connected and is in the CELL_PCH state, the FAP sends the Downlink Direct Transfer which contains the CC Call Setup message to the UE.

The FAP also comprises a presence checking module 30, as described in the European patent application filing number 09447049.9 from the same applicant. The presence checking module comprises an aging mechanism to detect if a UE left the cell. It enables the FAP to detect that a UE that was in CELL_PCH state is no longer in the cell. In particular, the FAP sends a paging message to the UE to enquire if it is still with the same cell. If the UE does not respond back, the FAP releases the RRC Connection.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A method at a cellular access point (1), comprising the steps of:
- opening (S1) a communication with a cellular terminal (3), comprising setting up a Radio Resource Control connection with said cellular terminal;
- on termination of said communication (S2), leaving said cellular terminal in the Radio Resource Control connection (S3); and
- when setting up a second communication with said cellular terminal, opening said second communication from said Radio Resource Control connection (S4).

2. Method according to the preceding claim, on termination of said communication, setting said terminal into a CELL_PCH state.

3. Method according to claim 1 or 2, said communication being a voice call.

4. Method according to any one of the preceding claims, comprising a step of, prior to opening said second communication, checking if said cellular terminal is still present in the cell of said cellular base station.

5. A cellular access point (1) comprising:
- a call setup manager (27) for managing a communication with a cellular terminal (3), said communication comprising a Radio Resource Control connection and, on termination of a communication with a cellular terminal, leaving said cellular terminal in said Radio Resource Control connection so that on setting up a second communication with said cellular terminal, opening said second communication from said Radio Resource Control connection.

6. Cellular access point device according to claim 5, said call setup manager being adapted to, on termination of a communication with a cellular terminal, setting said cellular terminal in a CELL_PCH state.

7. Cellular access point device according to claim 5 or 6, comprising a device classifier (28) for recoding an identifier of said cellular terminal, said cellular access point device being adapted to manage communication with a recorded cellular terminal only.

8. Cellular access point device according to any one of the claims 5 to 7, said device classifier (28) being adapted to enable an end user to enter a cellular terminal identifier.

9. Cellular access point device according to any one of the claims 5 to 8, comprising a detector (29) for detecting a cellular terminal that regularly connects to said cellular access point so that when a cellular terminal regularly connects to said cellular access point, recording an identifier of said cellular terminal at said device classifier (28).

10. Cellular access point device according to any one of the claims 5 to 9, comprising a presence detector (30) for detecting if said cellular terminal is still present in the cell of said cellular base station.
